# EUROPEAN PATENT SPECIFICATION

(11) **EP 3 726 843 B1**
(45) Date of publication and mention of the grant of the patent: **28.12.2022**
(21) Application number: 18888608.9
(22) Date of filing: 23.11.2018
(51) Int. Cl.: H04N 21/431

(54) **ANIMATION IMPLEMENTATION METHOD, TERMINAL AND STORAGE MEDIUM**
ANIMATIONSIMPLEMENTIERUNGSVERFAHREN, ENDGERÄT UND SPEICHERMEDIUM
PROCÉDÉ D'IMPLÉMENTATION D'ANIMATION, TERMINAL, ET SUPPORT DE STOCKAGE

(30) Priority: 14.12.2017 CN 201711339423
(43) Date of publication of application: 21.10.2020
(73) Proprietor: Tencent Technology (Shenzhen) Company Limited, Shenzhen, Guangdong 518057 (CN)
(72) Inventor: PAN, Wenting, Shenzhen, Guangdong 518057 (CN); NING, Binquan, Shenzhen, Guangdong 518057 (CN); CHENG, Ping, Shenzhen, Guangdong 518057 (CN); CAO, Chaoli, Shenzhen, Guangdong 518057 (CN); QIN, Xiaolong, Shenzhen, Guangdong 518057 (CN); YU, Fan, Shenzhen, Guangdong 518057 (CN)
(74) Representative: Gunzelmann, Rainer
(86) International application number: PCT/CN2018/117278
(87) International publication number: WO 2019/114528

(56) References cited:
- CN-A- 102 447 873
- CN-A- 103 473 027
- CN-A- 106 165 320
- CN-A- 106 415 667
- CN-A- 107 124 664
- US-A1- 2014 184 912
- US-A1- 2017 013 236
- US-B1- 7 039 676
- "Remote collaboration using augmented reality videoconferencing", ACM, 2 PENN PLAZA, SUITE 701 - NEW YORK USA, 17 May 2004 (2004-05-17), XP040005136,

## Description

The application claims priority to Chinese Patent Application No. 201711339423.6, entitled "Animation Implementation Method and Apparatus", filed in the Chinese Patent Office on December 14, 2017.

### Technical Field

The application relates to the technical field of videos, and in particular to an animation implementation method, terminal and storage medium.

### Background

As the wireless transmission speed of mobile communication data is greatly improved, live video or chatting is increasingly widely used and welcomed by users.

In order to meet the requirement that a plurality of users perform live video or chatting simultaneously, the current live video products all support a multi-person live video mode. A terminal may display video pictures of all chat users on a live video interface in the multi-person live video mode, such that the user may see the video pictures of its own and other live users.

In order to increase the interestingness of the live video products, some live video products also have a video interaction function, such as an animation effect, like adding an expression, such that a plurality of other users may see video pictures with the expression added. Specifically, the terminal may add a corresponding expression to a video picture of a user, and then the video picture added with the expression is sent to the video receiver terminal through a network to display, thereby realizing the synchronization of an animation effect.

However, in the current video interaction scheme, it is required that video pictures with expressions are sent to the terminals of other video chatting users through a network, and there will be a waste of network resources.

Prior art related to an animation implementation method is known, for instance, from U.S. Patent Application Publication No. 2017/013236 A1.

### Summary

According to various embodiments of the application, there is provided an animation implementation method, terminal and storage medium.

An animation implementation method is carried out by a terminal, the terminal comprising at least a memory and a processor. The method comprises the steps of claim 1.

A terminal, comprises at least a memory and a processor, the memory having stored therein computer-readable instructions which, when executed by the processor, cause the processor to perform the method described above.

A non-volatile computer-readable storage medium, storing computer-readable instructions which, when executed by one or more processors, cause the one or more processors to perform the method described above.

The details of one or more embodiments of the application are presented in the accompanying drawings and the description below. Other features, objects, and advantages of the application will be more apparent from the following detailed description and the accompanying drawings, and the claims.

### Brief Description of the Drawings

In order to more clearly illustrate the technical solutions in the embodiments of the application, the drawings used in the description of the embodiments are briefly described below, and it is obvious that the drawings in the description hereinafter are only some embodiments of the application, and that other drawings may be obtained from these drawings herein without involving any inventive effort for a person skilled in the art.
FIG. 1 is a schematic view of a scene of a video interactive system according to an embodiment of the application;
FIG. 2 is a flow diagram of an animation implementation method according to an embodiment of the application;
FIG. 3 is a schematic diagram of a first animation according to an embodiment of the application;
FIG. 4 is a schematic diagram of a second animation according to an embodiment of the application;
FIG. 5 is a schematic diagram of a third animation according to an embodiment of the application;
FIG. 6 is a schematic diagram of a fourth animation according to an embodiment of the application;
FIG. 7 is a schematic diagram of a window judgment area according to an embodiment of the application;
FIG. 8 is a schematic diagram of a termination window determination according to an embodiment of the application;
FIG. 9 is a schematic diagram of another termination window determination according to an embodiment of the application;
FIG. 10 is a schematic diagram of a window dither animation according to an embodiment of the application;
FIG. 11 is a schematic diagram of a hammering animation according to an embodiment of the application;
FIG. 12 is a schematic diagram of a fifth animation according to an embodiment of the application;
FIG. 13 is a schematic diagram of a sixth animation according to an embodiment of the application;
FIG. 14 is a schematic diagram of a seventh animation according to an embodiment of the application;
FIG. 15 is a schematic diagram of an eighth animation according to an embodiment of the application;
FIG. 16 is a schematic diagram of a ninth animation according to an embodiment of the application;

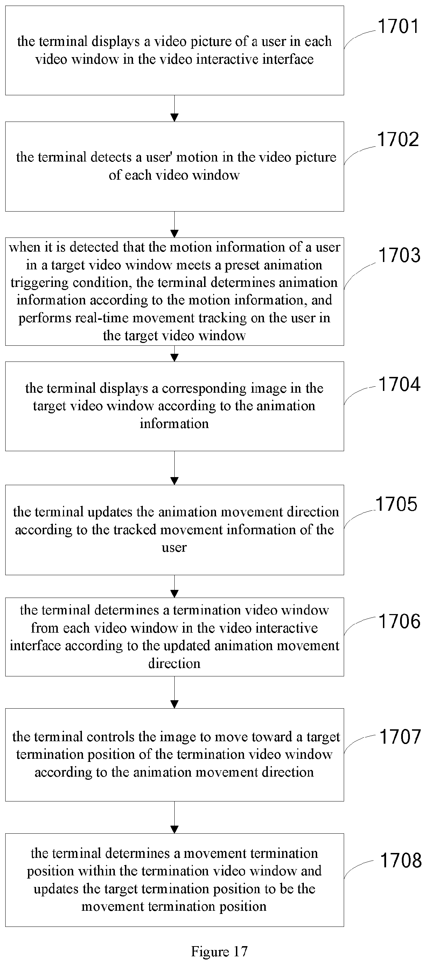

FIG. 17 is another flow diagram of an animation implementation method according to an embodiment of the application;
FIG. 18 is a schematic diagram of a frame of an animation implementation method according to an embodiment of the application;
FIG. 19 is a schematic diagram of a tenth animation according to an embodiment of the application;
FIG. 20 is a schematic diagram of an eleventh animation according to an embodiment of the application;
FIG. 21 is a schematic diagram of a twelfth animation according to an embodiment of the application;
FIG. 22 is a schematic diagram of a thirteenth animation according to an embodiment of the application;
FIG. 23 is a schematic diagram of a first configuration of an animation implementation apparatus according to an embodiment of the application;
FIG. 24 is a schematic diagram of a second configuration of an animation implementation apparatus according to an embodiment of the application;
FIG. 25 is a schematic diagram of a third configuration of an animation implementation apparatus according to an embodiment of the application;
FIG. 26 is a schematic diagram of a structure of a terminal according to an embodiment of the application.

### Detailed Description of Embodiments

A clear and complete description of the technical scheme in the embodiments of the application will be made below with the accompanying drawings, and it is obvious the embodiments depicted are merely some embodiments of the application, but not all of embodiments. Based on the embodiments in the application, all other embodiments obtained by those of skill in the art without involving any inventive effort are within the scope of protection of the application.

The embodiments of the application provide a video interactive system, which includes an animation implementation apparatus provided in any embodiment of the application. The animation implementation apparatus may be integrated in a terminal, and the terminal is an equipment such as a mobile phone, a tablet personal computer and the like. In addition, the video interactive system may further include other equipments, such as a server and the like. And the server is configured to forward videos uploaded by the terminal.

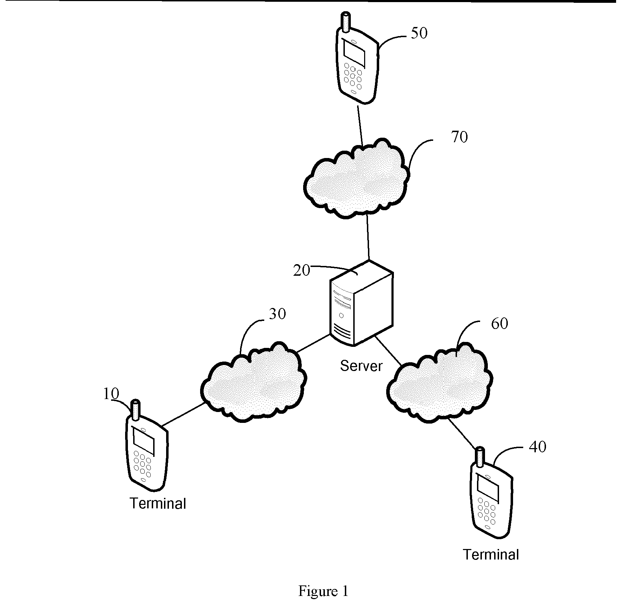

Referring to FIG. 1, an embodiment of the application provides a video interactive system including: a terminal 10, a server 20, a terminal 40 and a terminal 50; wherein the terminal 10 is connected to the server 20 via a network 30, the terminal 40 is connected to the server 20 via a network 60, and the terminal 50 is connected to the server 20 via a network 70. The network 30, the network 60 and the network 70 may include network entities such as a router, a gateway, and the like, which are not shown in FIG. 1. The terminal 10, the terminal 40 and the terminal 50 may interact with the server 20 via a wired network or a wireless network, for example, downloading from the server 20 an application (e.g. a live video application), and/or, an application update data package, and/or, data information or service information related to the application. The terminal 10 may be a mobile phone, a tablet personal computer, a notebook computer and others. FIG. 1 illustrates the terminal 10 as a mobile phone. Various applications required by a user may be installed in the terminal 10, such as an application having an entertainment function (e.g., a live video application, an audio playing application, a reading software), and an application having a service function (e.g., a map navigation application, a group purchase application and the like).

Based on the above-described system shown in FIG. 1, taking a live video application as an example, the terminal 10 may download a live video application and/or a live video application update data package and/or data information or service information (e.g., video data, etc.) associated with the live video application from the server 20 via the network 30 as desired. According to the embodiment of the application, when the terminal 10 performs video interaction with the terminal 40 and the terminal 50, the terminal 10 may perform motion detection on objects in each video window in the video interactive interface; when motion information of an object in a target video window is detected, animation information and an animation movement direction are determined according to the motion information; a termination video window is determined from each video window in the video interactive interface according to the animation movement direction; and animation display is performed in the termination video window according to the animation information.

The terminal 40 and the terminal 50 perform the same operations as the terminal 10. The terminal 10, the terminal 40 and the terminal 50 respectively display the same animation effect in the video interactive interface, i.e., perform animation display with respect to the termination video window.

The above-described example of FIG. 1 is only one example of a system architecture for implementing the embodiments of the application, and the embodiments of the application are not limited to the above-described system architecture as shown in FIG. 1, and various embodiments of the application are presented based on the system architecture.

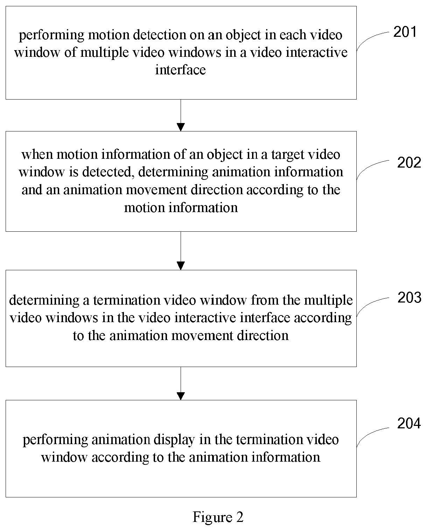

In one embodiment, there is provided an animation implementation method, which may be executed by a processor of a terminal, as shown in FIG. 2, the detailed flow of the animation implementation method is as follows:
Step 201, performing motion detection on an object in each video window of multiple video windows in a video interactive interface.

The video interactive interface comprises a plurality of video windows, and a corresponding video picture is displayed in each video window.

For example, the video interactive interface may be a multi-person video interactive interface, i.e., a video interactive interface when multiple users perform video interaction. The multi-person video interactive interface comprises a plurality of video windows, and a video picture of a corresponding user is displayed in each video window.

An object in a video window is an object in a video picture displayed by the video window. The object refers to an object subject of the video picture, and the object subject may be set according to actual requirements, for example, the object subject may be a pet, such as a cat, a dog, a person and the like.

For example, an object within a video window may be a user in a video picture displayed by the video window.

The motion of the object may include a position change of the object in the video picture, for example, when the object is a user, the motion of the object may be a position change of the user in the video picture, including the position change of the user's head, hands, face, body, feet and other parts. The position change or motion of the hands may be referred to as a gesture. The position change or motion of the user's entire body may be referred to as a posture, and the position change or motion of the face is the user's facial expression.

In practical application, a terminal may acquire video data of members in a multi-person live from a server via a network, and then display the video data of the corresponding members in corresponding video windows in the video interactive interface.

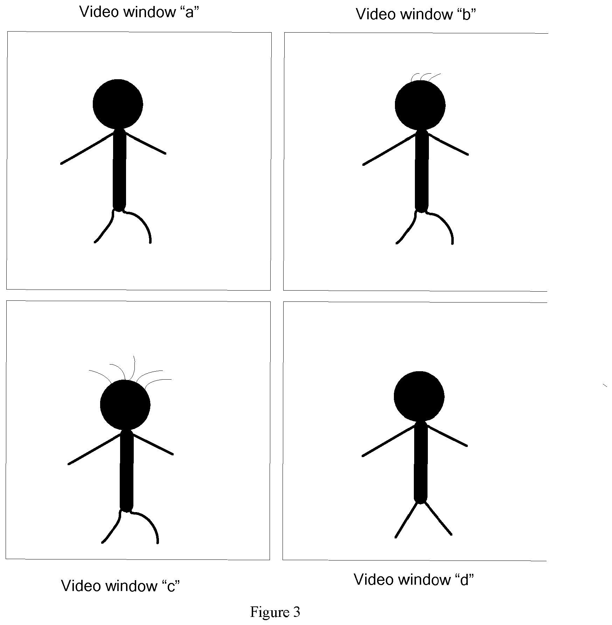

For example, referring to FIG. 3, in a four-person video interaction such as a live video, the terminal may display four video windows, i.e., the video windows a, b, c and d, in a video interactive interface, each video window displaying a video picture of a corresponding user. At this time, the terminal may perform motion detection on the users in the video pictures of the video windows a, b, c and d respectively.

Step 202, when motion information of an object in a target video window is detected, determining animation information and an animation movement direction according to the motion information.

The target video window is any video window in the video interactive interface, or a video window in which an object makes motion. For example, when an object within a video window begins to act, the video window is determined as the target video window.

The motion information of the object may be position change information of the object, for example, when the object is a user, the motion information may include motion information of various parts of the user, such as hand motion information, head motion information, leg motion information and the like.

In one embodiment, the motion information may include a motion type and/or a motion direction; at this point, corresponding animation information may be determined according to the motion type, and an animation movement direction may be determined according to the motion direction. That is, the step of "determining animation information and an animation movement direction according to the motion information" may include: determining corresponding animation information according to the motion type, and determining a corresponding animation movement direction according to the motion direction.

There are various ways of determining animation information based on the motion type, for example, in one embodiment, a mapping relationship between the motion type and the animation information may be preset, and after the motion information is detected, corresponding animation information may be obtained based on the mapping relationship.

There are various ways of determining an animation movement direction based on the motion direction, which may be set according to actual requirements. For example, in one embodiment, the motion direction may be regarded directly as the animation movement direction, or the opposite direction of the motion direction may be taken as the animation movement direction, or a vertical direction perpendicular to the motion direction may be taken as the animation movement direction, and the like.

The motion type may be divided according to actual requirements, for example, taking hand motion as an example, the hand motion may be divided into: drawing loving heart, throwing things, holding fists, shooting arrows, knocking, dragging, scissor gestures, Ok gestures and the like.

As another example, taking a head motion as an example, the head motion may be divided into: shaking head, nodding, tilting head and the like.

As another example, taking a body motion as an example, the body motion may be divided into: swaying left and right, swaying up and down, leaning and the like.

The motion direction is the movement direction or the movement trend direction of the motion of the object. For example, when a user throws something to the right, the motion direction may be the right direction, etc.

The animation information may include information related to the animation, such as animation triggering position, animation type, animation duration.

The animation type may be divided according to actual requirements, for example, the animation type may be divided into: video window transformation (e.g., video window dithering, shape change, etc.), displaying animations within a video window (e.g., displaying within a video window), displaying a moving animation within a video window, displaying an animation within a video window and moving to another video window, etc.

As another example, the animation type may further be divided into: a heart-shaped animation, a bomb animation, a bow and arrow animation and the like.

In one embodiment, after the motion information is detected, it may determine whether the motion information meets a preset animation triggering condition, and if so, animation information and an animation movement direction are determined according to the motion information.

The preset animation triggering condition is a motion condition for triggering an animation, and may be set according to actual requirements. For example, when the motion information includes a motion type, the preset animation triggering condition may include the motion type being a preset motion type. For example, when the object is a user, the preset animation triggering condition may include: the hand motion of the user is a preset hand motion type, i.e., the gesture of the user is a preset gesture, i.e., a specific gesture; for example, the gesture of the user is a gesture of drawing a predetermined pattern (such as a heart shape, a circle and the like), a gesture for poking a thing, a fist holding gesture and the like.

As another example, the preset animation triggering condition may further include: the head motion type of the user is a preset head motion type, that is, the head motion is a specific head motion, such as head shaking of the user and the like; the user's body motion is a specific body motion, that is, the user's posture is a specific posture, for example, the user's twisting waist, etc.

As another example, the preset animation triggering condition may further include: the facial expression type of the user is a preset facial expression type, that is, the facial expression is a specific facial expression, for example, the user's angry mouth-opening, happily laughing, and the like.

In one embodiment, the motion information of the detected object may include: the motion type of the object, the position information of the motion of the object in the video window and the motion direction information of the object; at this time, the step of "determining animation information and an animation motion direction according to the motion information" may include: determining a corresponding animation triggering position in the target video window according to the position information; determining an animation movement direction according to the motion direction information; and determining an animation type required to be triggered according to the motion type.

In one embodiment, a mapping relationship between a motion type and an animation type may be preset, and after motion information is detected, an animation type required to trigger may be determined based on the current motion type and the mapping relationship.

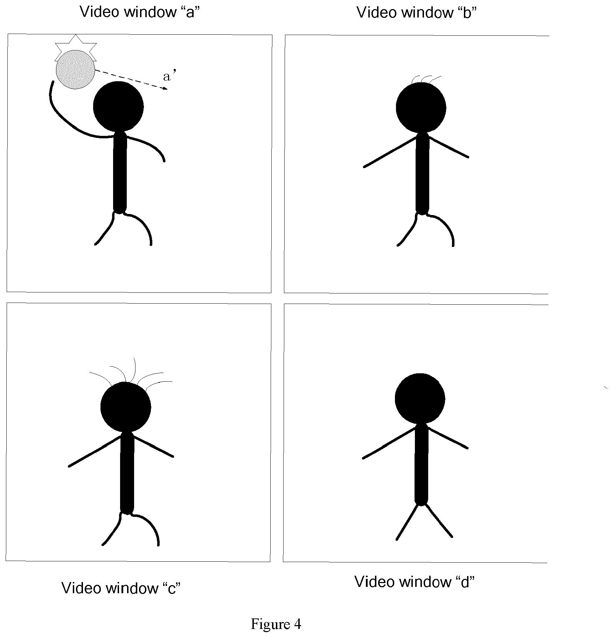

For example, referring to FIG. 4, when a user in the video window "a" is detected to make a gesture of throwing something, an animation triggering position may be determined according to the gesture position, an animation movement direction a' may be determined according to the gesture movement direction, an animation type of "throwing a bomb" may be determined according to the motion type of "throwing something". A bomb image may be displayed in the video window "a" according to the animation triggering position, and the bomb image is controlled to move according to the animation movement direction a'.

Step 203, determining a termination video window from the multiple video windows in the video interactive interface according to the animation movement direction.

The termination video window is a video window required to implement the final animation. For example, when the animation is an image movement, the termination video window may be a video window where the image finally reaches; when the animation is a video window transformation, the termination video window is a video window required to be transformed; when the animation is an image movement, the termination video window may be a video window where the image needs to be displayed and move.

In one embodiment, the way to determine the termination video window according to the animation movement direction may be various, for example, in order to increase the speed of determining the termination video window, a window judgment area of the video window may be preset in the video interactive interface, and then the termination video window is determined based on the animation movement direction and the window judgment area of each video window.

In the claimed embodiment, the step of "determining a termination video window of image movement according to the movement direction" comprises: determining a window judgment area of a candidate video window, wherein the candidate video window is a video window except the target video window in the video interactive interface; drawing a straight line in the video interactive interface according to the animation movement direction; determining a target window judgment area first reached when drawing the straight line; and taking a candidate video window corresponding to the target window judgment area as a termination video window.

The window judgment area is an area used for judging a termination video window in the video interactive interface. The video interactive interface comprises a window judgment area corresponding to each video window. In one embodiment, the sum of the areas of all the window judgment areas is equal to the sum of the areas of all the video windows.

The window judgment area of the video window may be divided according to actual requirements, and the window judgment area of the video window includes at least part of the area of the video window.

In the following, an image movement being the animation is taken as an example to illustrate how to determine the termination video window.

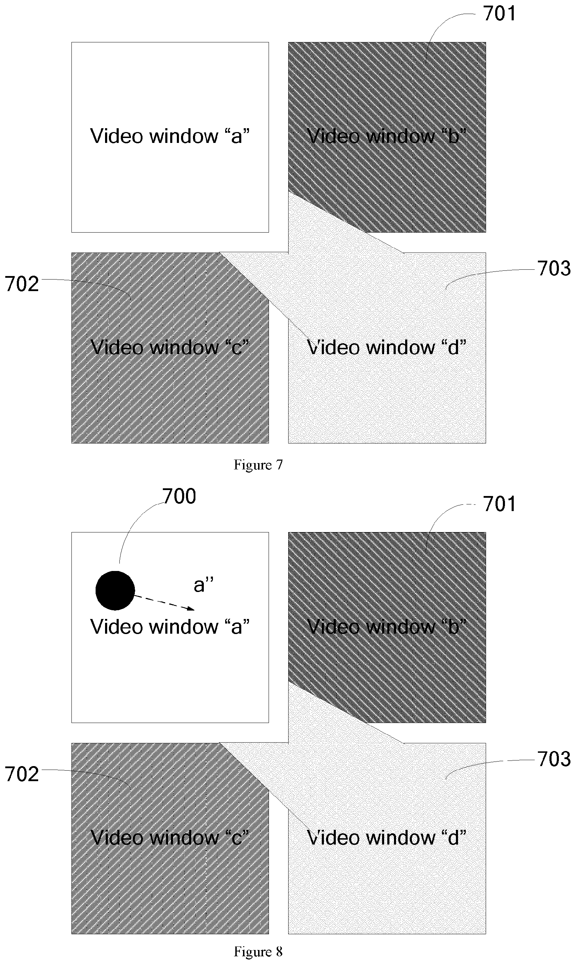

For example, referring to FIG. 7, the video window "a" is a target video window, a window judgment area of the video window "b" is area 701, a window judgment area of the video window "c" is area 702, and a window judgment area of the video window "d" is area 703. The area 701 contains a part of the window "b", and the area 703 contains the entire video window "d", and a part of the video windows "b" and "c".

The video window first reached is the video window where an image arrives first. The implementation for determining a target window judgment area which is first reached when the image moves according to the animation movement direction may comprise the following steps: drawing a straight line in the video interactive interface according to the animation movement direction, and determining the window judgment area first reached by the straight line to be a target window judgment area first reached by the image.

Referring to FIG. 8, when the image 700 moves according to the movement direction a", it may be judged that the image 700 first reaches the window judgment area 701 of the video window "b", specifically, a straight line is drawn in the video interactive interface based on the movement direction a", and it may be seen from the figure that the straight line first reaches the window judgment area 701 of the video window "b", thus the video window "b" is a termination video window reached by the image.

In one embodiment, when the image does not reach any window judgment area when moving according to the animation movement direction, the movement termination position for image moving is determined to be a boundary position of the target video window. For example, the movement termination position may be the boundary position of the target video window reached when the image is moving in the animation movement direction.

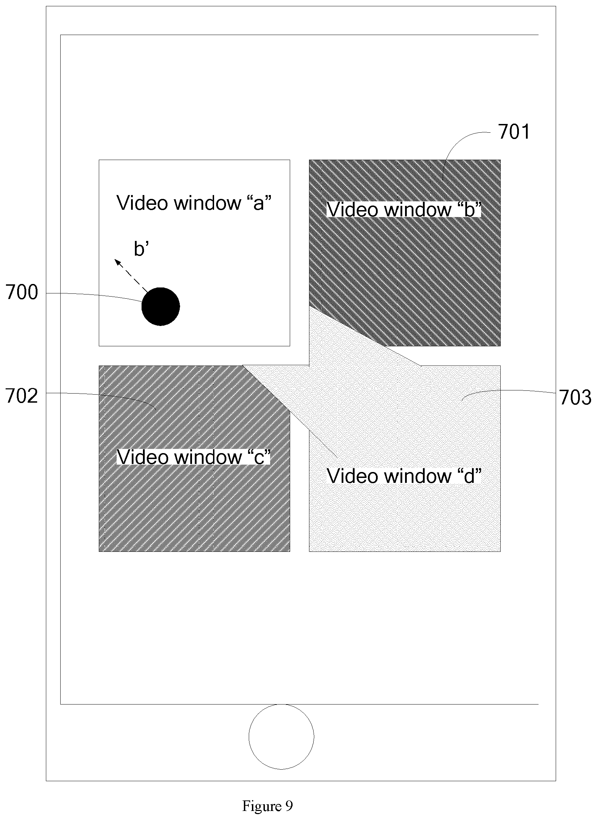

For example, referring to FIG. 9, when the image 700 moves according to the movement direction b', without reaching any one of the video windows "b", "c" and "d", thus it is determined that the movement termination position of the image movement is the boundary position of the video window.

Step 204, performing animation display in the termination video window according to the animation information.

The animation display mode may comprise a plurality of modes as follows:

### (1) termination video window transformation.

The step of "performing animation display in the termination video window according to the animation information" includes: performing transformation on the termination video window according to the animation information.

The transformation of the video window may include: shape change, position change, background change of the video window, and other types. The position change may include: video window dithering, video window rotating, video window jumping and the like.

In one embodiment, the animation information may include a video window transformation type, so that transformation may be performed to the termination video window according to the window transformation type.

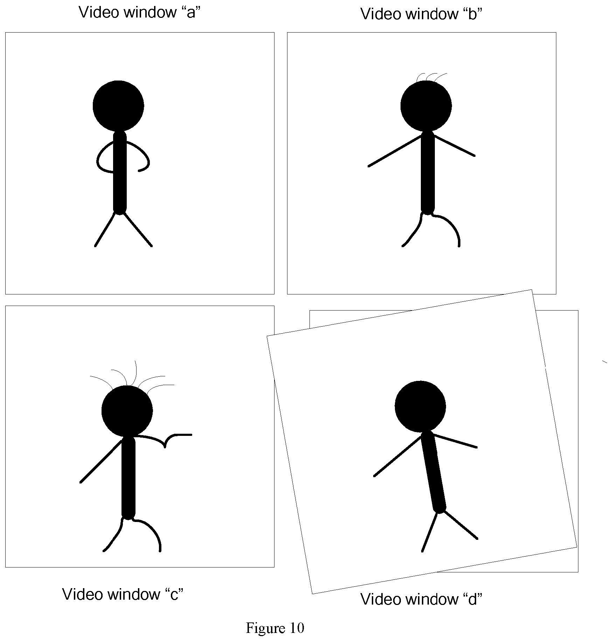

For example, referring to FIG. 10, when a user in the video window "c" makes a "poking" motion towards the video window "d", motion information (for example, a motion type, a motion direction) of the "poking" may be detected, an animation movement direction c' and a window transformation type (such as window dithering) are determined based on the motion information, and the termination video window is determined to be the video window "d" according to the animation movement direction c', and then the video window "d" is controlled to dither.

As another example, when a user in the video window "c" makes a "blowing" motion towards the video window "d" for many times, motion information (for example, a motion type, a motion direction) of the "blowing" may be detected, an animation movement direction and a window transformation type (such as window jumping) are determined based on the motion information, and the termination video window is determined to be the video window "d" according to the animation movement direction, and then the video window "d" is controlled to jump.

Also for example, when a user in the video window "a" makes a "rotating" motion towards the video window "b", motion information (for example, a motion type, a motion direction) of the "rotating" may be detected, an animation movement direction and a window transformation type (such as window rotating) are determined based on the motion information, and the termination video window is determined to be the video window "b" according to the animation movement direction, and then the video window "b" is controlled to rotate.

### (2) animation implementation within the termination video window.

That is, the step of "performing animation display in the termination video window according to the animation information" includes: displaying an image corresponding to the animation information within the termination video window, and controlling the image to move within the termination video window.

The animation information may include an image type of the subject image of the animation, an image corresponding to the image type may be displayed within the termination video window, and the image may be controlled to move within the termination video window. The image type may be divided according to actual requirements, for example, including: a hammer image, a shovel image, a sword image, a flame image, etc.

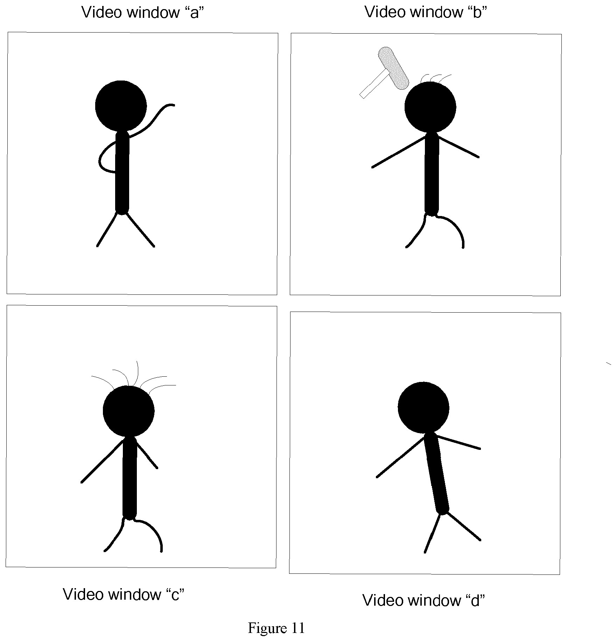

For example, referring to FIG. 11, when a user in the video window "c" makes a "hammering" motion towards the video window "d", motion information (for example, a motion type, a motion direction) of the "hammering" may be detected, and an animation movement direction d' and a subject image type (e.g., "hammer") in the animation may be determined based on the motion information, and the termination video window is determined to be the video window "d" based on the animation movement direction d', and then the video window "d" displays a "hammer" image and controls the "hammer" image to move in the video window "d", for example, nonstop tapping.

In one embodiment, an animation triggering position may be determined based on the position information of an object within the termination video window, and then an image corresponding to the animation information is displayed according to the animation triggering position, and the image is controlled to move within the termination video window.

In one embodiment, a motion frequency of an object within the target video window may also be obtained, an image may be controlled to move within the termination video window based on the motion frequency, for example, the movement frequency of "hammering" in the video window "c" may be obtained, and the motion frequency of the "hammer" image within the termination video window may be controlled based on the motion frequency during animation display.

### (3) cross-video-window animation.

The step of "performing animation display in the termination video window according to the animation information" includes: displaying a image in the target video window according to the animation information; controlling the image to move to the target termination position of the termination video window according to the animation movement direction; determining a movement termination position within the termination video window, and updating the target termination position as the movement termination position.

The displayed image may be a static image or a dynamic image which, for example, may include dynamic facial expressions, dynamic effect maps, for example, dynamic heart shape, dynamic bow and arrow, dynamic fist, dynamic blowkiss, etc., The type of the image may be divided according to actual requirements, such as a love expressing image, a shooting image, a joking image and the like.

The animation information may include the type of an animation subject image, the type of the image may correspond to the motion type of an object, and specifically, the image type of the image to be displayed may be determined according to the motion type; and a corresponding image is displayed at a corresponding position in the target video window according to the image type.

In addition, the animation information may further include an animation triggering position, thus a corresponding image may be displayed in the target video window according to the animation triggering position.

The movement termination position is the actual termination position of the image movement, and the motion is stopped when the image moves to the movement termination position. At the initial stage, the target termination position may be set according to actual requirements, such as any position within the termination video window.

The manner to determine the movement termination position may be various, for example, the center position of the termination video window may be selected as the movement termination position, or other positions within the termination video window may be selected as the movement termination position.

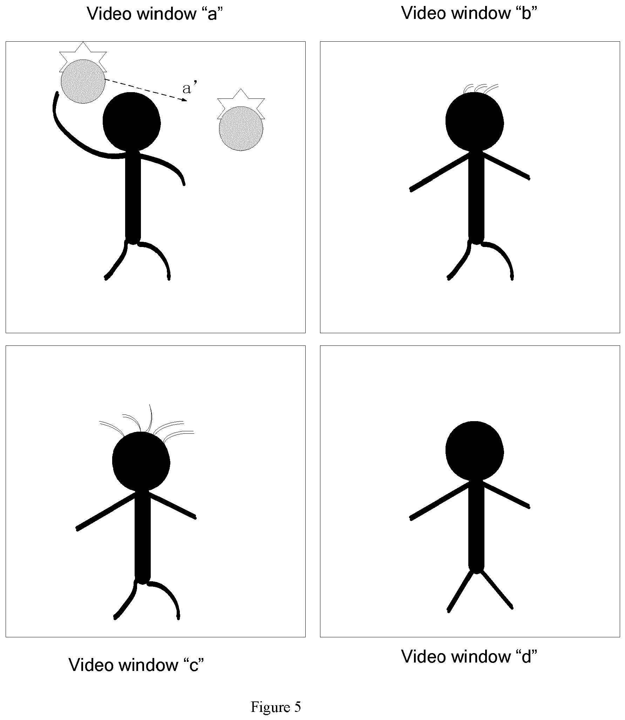

For example, referring to FIGs. 4 and 5, when it is detected that a user in the video window "a" makes a throwing gesture, an animation triggering position may be determined according to the gesture position, an animation movement direction a' may be determined according to the gesture movement direction, and an animation type of "throwing bomb" may be determined according to the motion type of "throwing". The termination video window may be determined to be the video window "b" according to the animation movement direction a', and then a bomb image may be displayed in the video window "a" according to the animation triggering position and controlled to move to the target termination position of the termination video window "b" according to the animation movement direction a'.

During the movement of the bomb image, a movement termination position, such as the central position of the video window "b", may be determined within the termination video window. The target termination position is updated to be the movement termination position. As shown in FIG. 5, it is possible to control the movement of the bomb image towards the central position of the video window "b", to which position the movement is stopped.

In one embodiment, when the image includes a plurality of sub-images, a target sub-image may be controlled to move toward the target termination position according to the movement direction of the image in the video interactive interface. For example, when the image is a bow and arrow image, the arrow image may be controlled to move toward the target termination position according to the movement direction of the image.

In one embodiment, after the image is displayed, the image may be adjusted according to the current animation movement direction, such that the image is more closely related to the motion of the object; moreover, the image movement triggering condition may also be set, so as to make the image effect more accurate. The step of "controlling the image to move to the target termination position of the termination video window according to the animation movement direction" includes: rotating the image according to the animation movement direction; and when current motion information of the object in the target video window meets a preset image movement triggering condition, controlling the rotated image to move to the target termination position of the termination video window according to the animation movement direction.

According to the embodiment of the application, after the motion information meets the preset image triggering condition, the motion detection is continuously performed on the object in the target video window, and when the motion information subsequently detected meets a certain condition, the movement of the image is triggered.

The preset image movement triggering condition may be the condition to trigger the movement of the image and may be set according to actual requirements. For example, the preset image triggering condition may include the user making a first particular gesture, and the preset image movement triggering condition may include the user making a second particular gesture. The preset image movement triggering condition may be associated with the preset image triggering condition; for example, the second particular gesture and the first particular gesture are consecutive gestures or associated gestures.

In one embodiment, to increase the interactivity of the image effect, the movement termination position may be determined based on motion information of an object within the termination video window. That is, the step of "determining a movement termination position within the termination video window" may include: detecting the motion of an object in the termination video window; and when it is detected that the motion information of the object within the termination video window meets a preset image receiving condition, determining a movement termination position for image moving in the target video window according to the motion information of the object within the termination video window.

The object within the termination video window is an object in a video picture displayed by the termination video window. The object is an object subject of the video picture, and the object subject may be set according to actual requirements, for example, the object subject may be a pet such as a cat, a dog, a person and the like.

The motion information of the object in the termination video window may include position information of the motion of the object in the termination video window. According to the embodiment of the application, it may determine the movement termination position of the image in the termination video window based on the position information.

The preset image receiving condition is a motion condition for triggering image receiving, and the receiving condition may be set according to actual requirements. For example, when the object is a user, the preset image receiving condition may include: the hand motion of the user is a preset hand motion, that is, the gesture of the user is a preset gesture, i.e., a specific gesture.

In one embodiment, the preset image receiving condition may correspond to or relate to the preset image triggering condition or the displayed image type. For example, when the image is a heart-shaped image, the preset image receiving condition may include a user's motion being cradling things (e.g., a heart-shaped image, a circular image, etc.) with two hands; as another example, when the image is a bow and arrow image, the preset image receiving condition may include: a user's motion being shot by the arrow (such as head inclination and the like); when the image is a bomb image, the preset image receiving condition may include: a user's motion being getting shot (e.g., eye-covering with both hands, etc.).

In one embodiment, it may perform real-time motion tracking on the object, an animation movement direction is determined through the tracked motion information, and the animation movement direction initially determined is updated. For example, before the image is controlled to move to the target termination position of the termination video window according to the animation movement direction, the method of the embodiment may include: when motion information of an object in the target video window is detected, performing real-time movement tracking on the object in the target video window; and updating the animation movement direction according to the tracked movement information.

For example, when the motion information detected meets a preset animation triggering condition (such as a motion type being a preset motion type), animation information and an animation movement direction may be determined according to the motion information, and real-time movement tracking is carried out on an object in the target video window; the animation movement direction is then updated based on the tracked movement information.

The tracked movement information may include direction information of the movement of the object motion, movement trend information of the object motion, etc., for example, movement trend of a user's gesture, etc.

For example, when a user's hand in the video window "a" is detected to make a first motion, real-time movement tracking may be performed on the motion, and animation information (e.g., an animation subject image type, an animation triggering position and the like) may be determined according to the first motion information, and when the user in the video window "a" continues to make a second motion, an animation movement direction may be determined again based on the movement information tracked to the second motion, and the animation movement direction is updated.

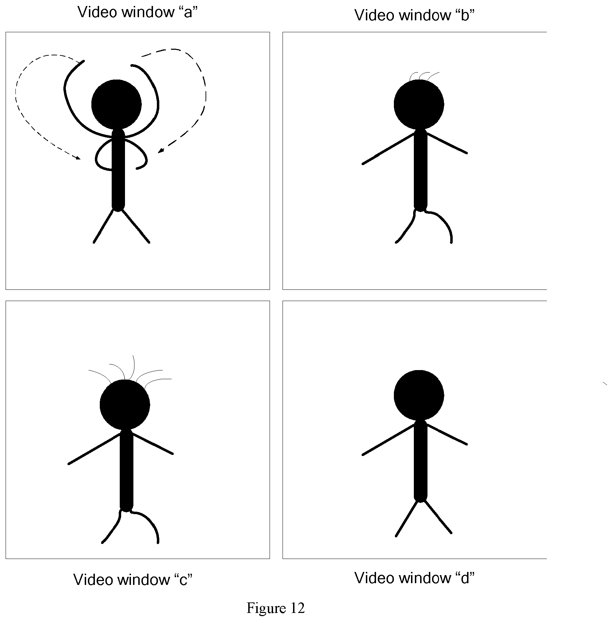

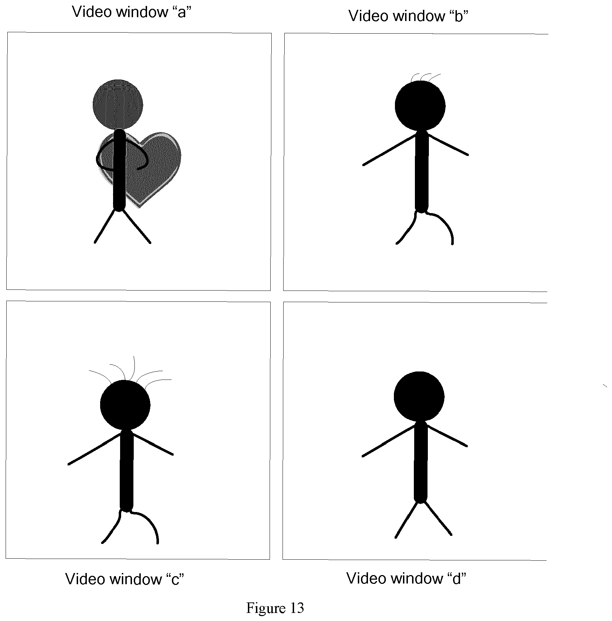

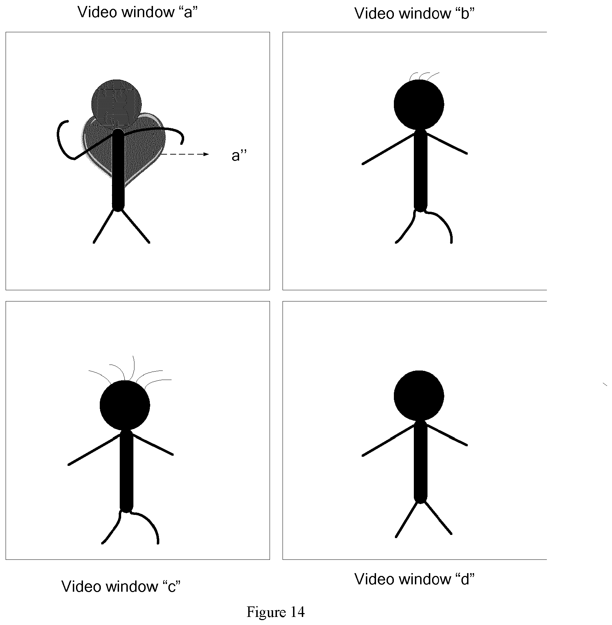

For example, referring to FIGs. 12, 13 and 14, when it is detected that a user makes a heart-shaped gesture in the video window "a", real-time movement tracking may be performed on the user, and animation information (such as an animation subject image type, an animation triggering position and the like) and an animation movement direction may be determined according to the heart-shaped gesture in the video window "a", and the image such as the heart-shaped image is displayed at a corresponding position of the video window "a"; referring to FIG. 14, when the user continues to make a continuous motion of hitting the heart-shaped image towards the right, an animation movement direction a", i.e., movement to the right, may be determined based on tracked movement trend information of the motion. The animation movement direction is updated to be a"; and the termination video window is determined to be the video window "b" according to the movement direction a", and then the heart-shaped image is controlled to move towards the target termination position of the video window "b" according to the animation movement direction a".

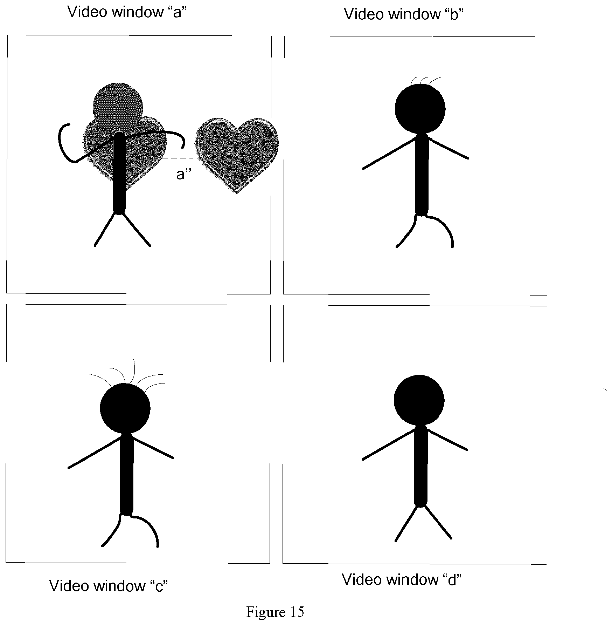

Referring to FIG. 15, after the animation movement direction a" is updated, the heart-shaped image is angularly rotated according to the movement direction a", and when it is detected that the user hits the image to the right, the rotated heart-shaped image may be controlled to move according to the movement direction a".

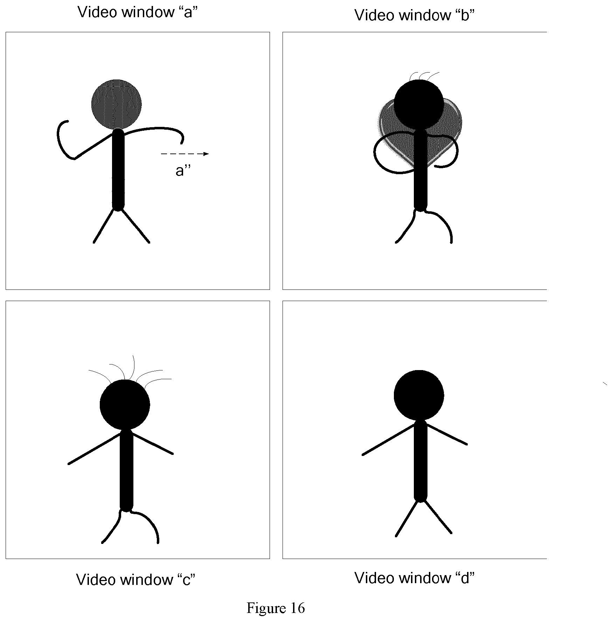

Referring to FIG. 16, when it is determined that the termination video window is the video window "b", a user's motion in the video window "b" may be detected, and when the user's motion is a two-handed cradling motion, a corresponding movement termination position F' may be determined in the video window "b" based on the user's motion information. Then, the target termination position F is updated to be the movement termination position F'. The heart-shaped image will thus move according to the movement direction a" to the movement termination position F'. Then, the image movement ends.

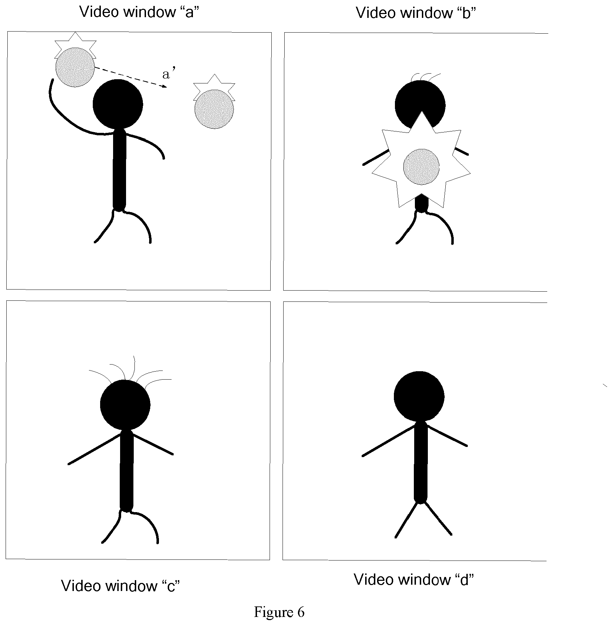

In one embodiment, when the image is moved to a movement termination position, a matching image matching the image may be displayed within the termination video window according to the motion termination position. For example, referring to FIG. 6, when the image is a bomb, as the bomb reaches the movement termination position within the video window "b", an explosion image matching the bomb image may be displayed in the video window "b" according to the movement termination position.

In one embodiment, when the image moves to the target termination position, the image is controlled to stay at the target termination position for a preset duration; during the image staying period, the image is controlled to move according to the current motion information of the object in the termination video window.

For example, when the image reaches the target termination position, the image stays at that position for 20s, during which the image may be correspondingly moved according to the user's motion in the termination video window, i.e., the image moves following the user's motion.

In one embodiment, when the movement termination position is a boundary position in the video window, the image may be controlled to disappear when the image reaches that position. That is, the image disappears after flying out of the video window.

It may be seen from the above that in the embodiment of the application, motion detection is performed on an object in each video window of multiple video windows in a video interactive interface; when the motion information of an object in a target video window is detected, animation information and an animation movement direction are determined according to the motion information; a termination video window is determined from the multiple video windows in the video interactive interface according to the animation movement direction; and animation display is performed in the termination video window according to the animation information. According to the scheme, cross-window animation may be realized in the video interactive interface based on motion information of an object in a video window; for each interactive party of a multi-person video interaction, each video interactive party terminal only needs to perform the same operation, i.e., motion information detection of objects in the video windows and corresponding cross-window animation implementation based on detection result, such that animation effect synchronization may be realized in multi-person video chatting or multi-person live video, without transmitting video pictures with animation effects to other video chatting or live video user terminals, therefore, network resources may be saved, and synchronization of animation effects may be improved.

In addition, according to the embodiment of the application, cross-window animation may be realized in the video interactive interface according to the motions of users in the videos, and different cross-window animation feedback is presented, such that the users of different video windows may have interactive experience more similar to a real world, and the distance sense of a real space is weakened, thereby greatly improving the interactivity of the video interaction.

In one embodiment, the method described in the above embodiments is described in further detail below.

The embodiments of the application provide an animation implementation system, which includes a terminal and a server, and referring to FIG. 1, the terminal is connected with the server through a network.

The animation implementation method of the application will be further described with cross-window animation as an example based on the animation implementation system shown above.

As shown in FIG.s 17 and 18, an animation implementation method may be specifically as follows:
Step 1701, the terminal displays a video picture of a user in each video window in the video interactive interface.

The video interactive interface includes a plurality of video windows, and a video picture of a corresponding user is displayed in each video window.

For example, when four users perform video interaction, the video pictures of the corresponding users may be displayed respectively in four video windows in the video interactive interface. For example, in video window "a" a video picture of user A is displayed, in video window "b" a video picture of user B is displayed, in video window "c" a video picture of user C is displayed, and in video window "d" a video picture of user D is displayed.

Step 1702, the terminal detects a user' motion in the video picture of each video window.

For example, the terminal may perform motion detection for users in video pictures of the video windows "a", "b", "c" and "d", respectively.

Step 1703, when it is detected that the motion information of a user in a target video window meets a preset animation triggering condition, the terminal determines animation information according to the motion information, and performs real-time movement tracking on the user in the target video window.

The target video window is any video window in the video interactive interface, or a video window in which an object acts. For example, when an object within a video window begins to act, the video window is the target video window.

The motion information may include a motion type, a motion direction and motion position information; corresponding animation information may be determined according to the motion type, and an animation movement direction may be determined according to the motion direction.

For example, the terminal determines an animation movement direction according to the motion direction, determines an image type of an animation subject image according to the motion type, and determines a corresponding image triggering position in the target video window according to the motion position information.

The motion type may be divided according to actual requirements, for example, taking hand motion as an example, the hand motion may be divided into: drawing loving heart, throwing things, holding fists, shooting arrows, knocking, dragging, scissor gestures, Ok gestures and the like. For example, when it is detected that the motion of the user D in the video window "d" meets a preset image triggering condition, real-time movement tracking may be performed on the user D in the video window "d".

The preset animation triggering condition is a motion condition for triggering animation and may be set according to actual requirements.

For example, when the motion information includes a motion type, the preset animation triggering condition may include the motion type being a preset motion type. For example, when the object is a user, the preset animation triggering condition may include: the hand motion of the user is a preset hand motion type, that is, the gesture of the user is a preset gesture, i.e., a specific gesture; for example, the gesture of the user is a gesture for drawing a predetermined pattern (such as a heart shape, a circle and the like), the gesture for poking things, a fist holding gesture and the like.

The preset animation triggering condition is a motion condition for triggering animation and may be set according to actual requirements. For example, when the motion information includes a motion type, the preset animation triggering condition may include the motion type being a preset motion type. For example, when the object is a user, the preset animation triggering condition may include: the hand motion of the user is a preset hand motion type, that is, the gesture of the user is a preset gesture, i.e., a specific gesture; for example, the gesture of the user is a gesture for drawing a predetermined pattern (such as a heart shape, a circle and the like), the gesture for poking things, a fist holding gesture and the like.

The image may be a static image or a dynamic image, and the dynamic image may include dynamic facial expressions and dynamic effect maps. Such as dynamic heart shape, dynamic bow and arrow, dynamic fist, dynamic blow kiss, etc.

The types of the images may be divided according to actual requirements, such as according to function division: a love expressing type (such as heart-shaped images, kiss images and the like), a shooting type (such as bow and arrow images, firearm images and the like), a joking type (such as facial expressions and the like) and the like.

For example, when it is detected that the motion of the user D in the video window "d" is a fist holding motion, an image triggering position, an image type and an initial animation movement direction are determined based on the motion information, for example, the image type is a shooting type image, and at the same time, real-time movement tracking is performed on the user D in the video window "d".

Step 1704, the terminal displays a corresponding image in the target video window according to the animation information.

For example, the terminal displays a corresponding image at an image triggering position according to the determined image type.

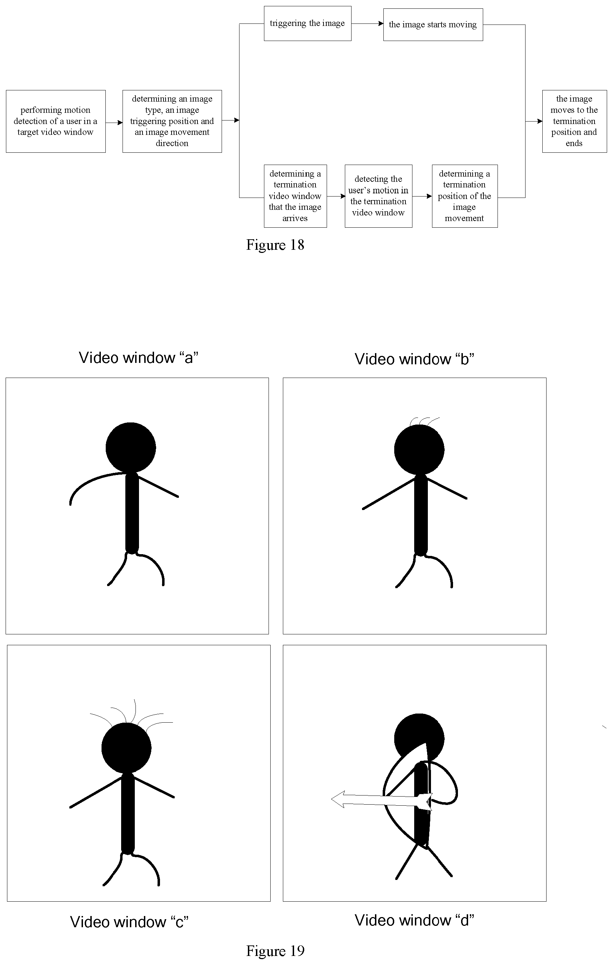

For example, referring to FIG. 19, when it is detected that the motion taken by the user D in the video window "d" is a fist holding motion, an image triggering position and an image type are determined based on the motion information, for example, the image type is a shooting type image. Then a bow and arrow image may be displayed at the position where the fist is held in the video window "d".

Step 1705, the terminal updates the animation movement direction according to the tracked movement information of the user.

The tracked movement information may include direction information of the movement of the object, movement trend information of the object, etc., for example, the movement trend of a user's gesture, etc.

After the initial animation movement direction is determined based on the motion information, the motion of the user may also be tracked in real time, and the animation movement direction is updated based on the tracked information.

Step 1706, the terminal determines a termination video window from each video window in the video interactive interface according to the updated animation movement direction.

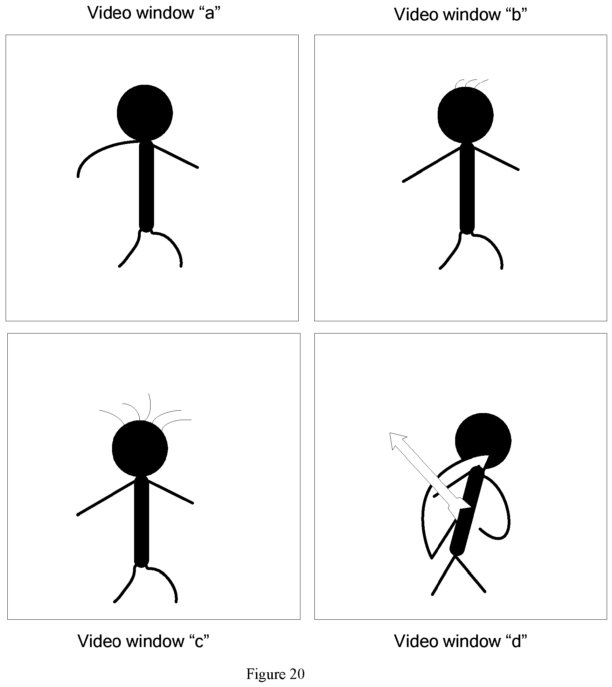

The termination video window is the video window where the image finally arrives. For example, referring to FIG. 20, the termination video window may be determined to be the video window "a" based on the movement direction. The image stops moving when it moves to the corresponding position of the video window "a".

In the embodiment, the manner in which the termination video window is determined based on the animation movement direction may be varied, for example, in order to improve the determination speed of the termination video window, a window judgment area of the video window may be preset in the video interactive interface, and then the termination video window is determined based on the animation movement direction and the window judgment area of each video window. Specifically, the termination video window determination process may be described with reference to the embodiments described above.

Step 1707, the terminal controls the image to move toward a target termination position of the termination video window according to the animation movement direction.

When the image consists of a plurality of sub-images, a certain sub-image may be selected to move to the target termination position in the video interactive interface according to the image movement direction.

The target termination position may be any position along the image movement direction in the video interactive interface; the target termination position may be set according to actual requirements. For example, in one embodiment, the target termination position value may be null.

In one embodiment, an image movement triggering condition may also be set, such that the image effect is more accurate; for example, when the current motion information of the object in the target video window meets the preset image movement triggering condition, the image is controlled to move to the target termination position in the video interactive interface according to the image movement direction.

The preset image movement triggering condition may be the condition to trigger the image movement and may be set according to actual requirements. For example, the preset image triggering condition may include the user making a first particular gesture, and the preset image movement triggering condition may include the user making a second particular gesture. The preset image movement triggering condition may be associated with the preset image triggering condition; for example, the second particular gesture and the first particular gesture are consecutive gestures or associated gestures.

Referring to FIG. 20, when the left hand of the user D is released from the fist-holding state, the arrow image is controlled to move toward the target termination position according to the movement direction.

Step 1708, the terminal determines a movement termination position within the termination video window and updates the target termination position to be the movement termination position.

In one embodiment, the motion of an object within the termination video window may be detected; when it is detected that the motion information of the object in the termination video window meets a preset image receiving condition, a movement termination position of the image movement is determined in the target video window according to the motion information of the object in the termination video window, and the target termination position is updated to be the movement termination position. The motion information of the object in the termination video window may include position information of the motion of the object in the termination video window, and according to the embodiment of the application, the movement termination position of the image in the termination video window may be determined based on the position information.

The preset image receiving condition may correspond to or be related to a displayed image type. For example, when the image is a heart-shaped image, the preset image receiving condition may include a user's motion being cradling things (e.g., a heart-shaped image, a circular image, etc.) with two hands; as another example, when the image is an arrow image, the preset image receiving condition may include: a user's motion being shot by the arrow (such as head inclination and the like); when the image is a bomb image, the preset image receiving condition may include: a user's motion being getting shot (e.g., eye-covering with both hands, etc.).

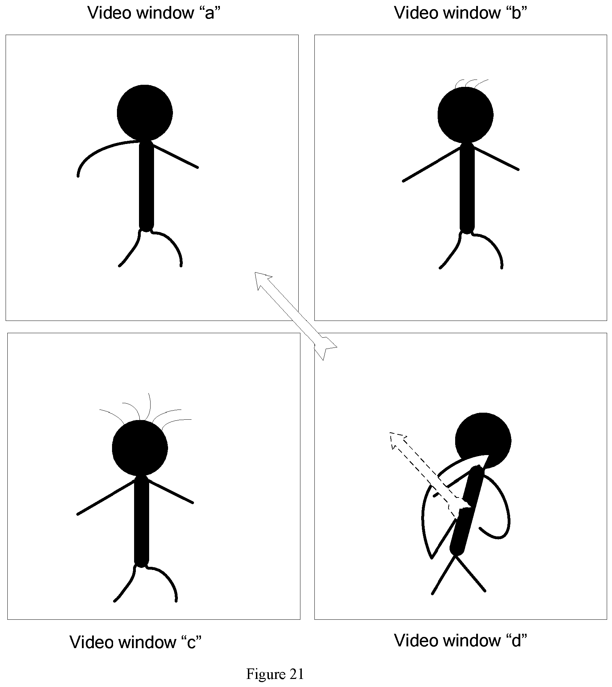

For example, referring to FIG. 21, when it is determined that the termination video window is the video window "a", motion detection may be performed on the user A in the video window "a", and when the motion of the user A meets the preset image receiving condition, the movement termination position may be determined based on the motion of the user A. For example, when the user A makes a motion of being shot by an arrow (e.g., the head is shifted to the left), the movement termination position may be determined based on the position information of the motion of being shot by the arrow in the window "a", and then the target termination position is updated to the movement termination position. At this point, the arrow will be directed to the face of the user A.

In one embodiment, when the image moves to the target termination position, the image is controlled to stay at the target termination position for a preset duration; during the image staying period, the image is controlled to move according to the current motion information of the object in the termination video window.

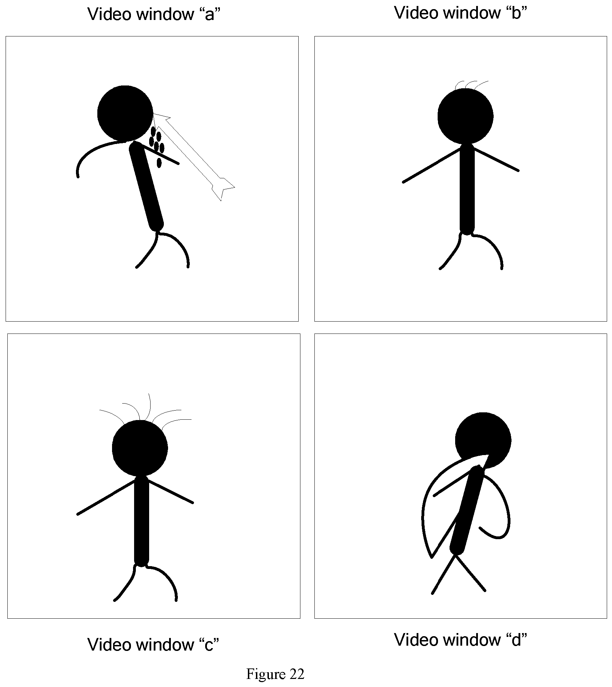

For example, referring to FIG. 22, when the arrow hits the face of the user A, it will stay for a preset duration such as 20s, etc. And during the staying period, the arrow will move as the user A's face moves.

In one embodiment, when the image is moved to a movement termination position, a matching image matching the image may be displayed within the termination video window according to the movement termination position. For example, referring to FIG. 6c, when the arrow hits the face of the user A, a bleeding image will be displayed on the corresponding position of the user A's face.

It may be seen from the above that in the embodiments of the application, motion detection is performed on an object in each video window of multiple video windows in a video interactive interface; when the motion information of an object in a target video window is detected, animation information and an animation movement direction are determined according to the motion information; a termination video window is determined from the multiple video windows in the video interactive interface according to the animation movement direction; and animation display is performed in the termination video window according to the animation information. According to the scheme, cross-window animation may be realized in the video interactive interface based on motion information of an object in a video window; for each interactive party of a multi-person video interaction, each video interactive party terminal only needs to perform the same operation, i.e., motion information detection of objects in the video windows and corresponding cross-window animation implementation based on detection result, such that animation effect synchronization may be realized in multi-person video chatting or multi-person live video, without transmitting video pictures with animation effects to other video chatting or live video user terminals, therefore, network resources may be saved, and synchronization of animation effects may be improved.

In addition, according to the embodiment of the application, cross-window animation may be realized in the video interactive interface according to the motions of users in the videos, and different cross-window animation feedback is presented, such that the users of different video windows may have interactive experience more similar to a real world, and the distance sense of a real space is weakened, thereby greatly improving the interactivity of the video interaction.

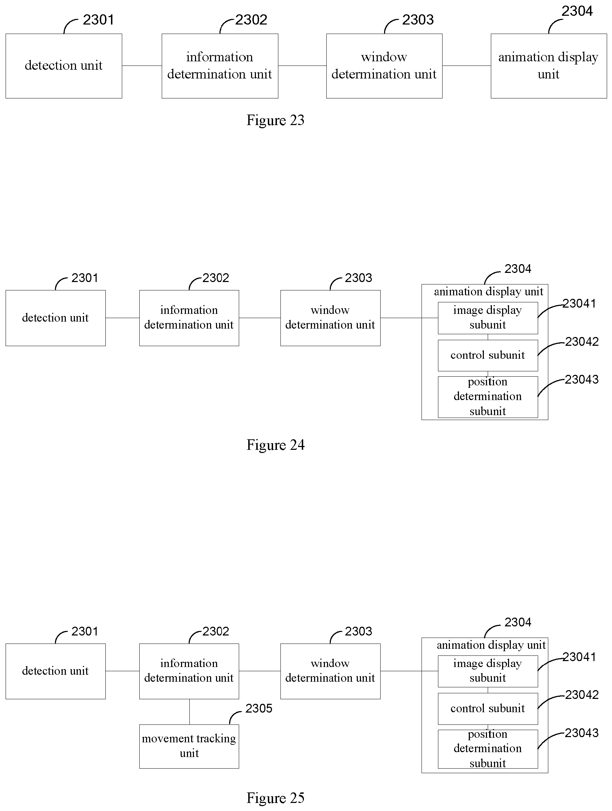

In order to better implement the above method, the embodiment of the application further provides an animation implementation apparatus, which as shown in FIG. 23 may include: a detection unit 2301, an information determination 2302, a window determination unit 2303, and an animation display unit 2304 as follows:
The detection unit 2301 is configured to perform motion detection on an object in each video window of multiple video windows in a video interactive interface.

The information determination unit 2302 is configured to, when the detection unit 2301 detects motion information of an object within a target video window, determine animation information and an animation movement direction according to the motion information.

The window determination unit 2303 is configured to determine a termination video window from the multiple video windows in the video interactive interface according to the animation movement direction.

The animation display unit 2304 is configured to perform animation display in the termination video window according to the animation information.

In one embodiment, the animation display unit 2304 is configured to: perform transformation on the termination video window according to the animation information.

In one embodiment, the animation display unit 2304 is configured to: display an image corresponding to the animation information in the termination video window, and control the image to move within the termination video window.

In one embodiment, referring to FIG. 24, the animation display unit 2304 includes:
an image display subunit 23041, which is configured to display an image in the target video window according to the animation information;
a control subunit 23042, which is configured to control the image to move to the target termination position of the termination video window according to the animation movement direction;
a position determination subunit 23043, which is configured to determine a movement termination position within the termination video window, and updating the target termination position as the movement termination position.

In one embodiment, the motion information includes a motion type and a motion direction; and the information determination unit 2302 is configured to the animation information according to the motion type, and determining the animation movement direction according to the motion direction.

In one embodiment, referring to FIG. 25, the animation implementation apparatus may further include: a movement tracking unit 2305;
the movement tracking unit 2305 is configured to: when the detection unit 2301 detects motion information of an object in a target video window, perform real-time movement tracking on the object in the target video window; and update the animation movement direction according to the tracked movement information.

In the claimed embodiment, the window determination unit 2303 is configured to: determine a window judgment area of a candidate video window, wherein the candidate video window is a video window except the target video window in the video interactive interface; draw a straight line in the video interactive interface according to the animation movement direction; determine a target window judgment area which is first reached when drawing the straight line; and take a candidate video window corresponding to the target window judgment area as the termination video window.

In one embodiment, the position determination subunit 23043 is configured to: perform motion detection on an object in the termination video window; and when it is detected that motion information of the object in the termination video window meets a preset image receiving condition, determining the movement termination position for image moving in the target video window according to the motion information of the object in the termination video window.

In one embodiment, the control subunit 23042 is configured to: rotate the image according to the animation movement direction; when current motion information of the object in the target video window meets a preset image movement triggering condition, controlling the rotated image to move to the target termination position according to the animation movement direction.

In one embodiment, the window determination unit 2303 may further be configured to: when a straight line drawn in the video interactive interface according to the animation movement direction does not reach any window judgment area, determine the movement termination position for image moving to be a boundary position of the target video window.

The video window first reached is the video window where an image arrives first. The implementation method for determining a target window judgment area which is first reached when the image moves according to the animation movement direction may include the following steps: drawing a straight line in the video interactive interface according to the animation movement direction, and determining that the window judgment area first contacted by the straight line is a target window judgment area first reached by the image.

In one embodiment, the control subunit 23042 is further configured to: when the image moves to the target termination position, control the image to stay at the target termination position for a preset duration; during the image staying period, control the image to move according to the current motion information of the object in the termination video window.

In specific implementation, each of the above-described units may be implemented as a separate entity, or in any combination, and may be implemented as the same or as several entities, each of which may be implemented in accordance with the preceding methods and embodiments and will not be described in detail herein.

The animation implementation apparatus may be particularly integrated with a terminal, for example, in the form of a client, and the terminal may be a mobile phone, a tablet personal computer and other equipment.

As may be seen from the above, the animation implementation apparatus in the embodiment of the application adopts the detection unit 2301 to perform motion detection on an object in each video window of multiple video windows in a video interactive interface; when it is detected that motion information of an object in a target video window meets a preset image triggering condition, the information determination unit 2302 is adopted to determine animation information and an animation movement direction according to the motion information; the window determination unit 2303 is adopted to a termination video window from the multiple video windows in the video interactive interface according to the animation movement direction; the animation display unit 2304 is adopted to perform animation display in the termination video window according to the animation information. According to the scheme, cross-window animation may be realized in the video interactive interface based on motion information of an object in a video window; for each interactive party of a multi-person video interaction, each video interactive party terminal only needs to perform the same operation, i.e., motion information detection of objects in the video windows and corresponding cross-window animation implementation based on detection result, such that animation effect synchronization may be realized in multi-person video chatting or multi-person live video, without transmitting video pictures with animation effects to other video chatting or live video user terminals, therefore, network resources may be saved, and synchronization of animation effects may be improved.

In order to better implement the methods, the embodiments of the application further provide a terminal which may be equipment such as a mobile phone, a tablet personal computer and the like.

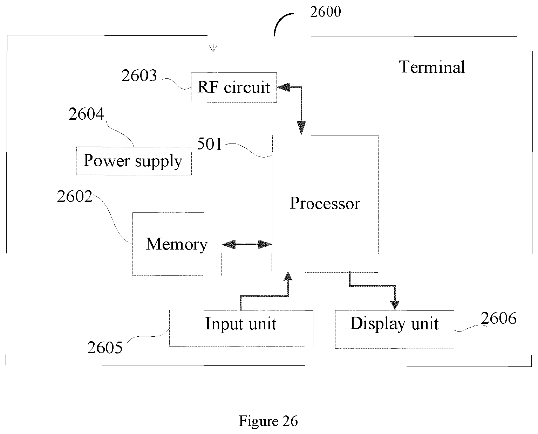

Referring to FIG. 26, the embodiment of the application provides a terminal 2600 that may include a processor 2601 of one or more processing cores, a memory 2602 of one or more computer-readable storage media, a radio frequency (RF) circuit 2603, a power supply 2604, an input unit 2605, a display unit 2606 and the like. It will be understood by those skilled in the art that a terminal structure shown in FIG. 26 is not intended to limit the terminal, and may include more or fewer components than shown, or combination of some components, or different arrangements of components. Wherein:
The processor 2601 is a control center of the terminal, connects various parts of the entire terminal using various interfaces and lines, performs various functions of the terminal and processes data by running or executing software programs and/or modules stored in the memory 2602, and invokes data stored in the memory 2602, thereby monitoring the terminal as a whole. Alternatively, the processor 2601 may include one or more processing cores; preferably, the processor 2601 may integrate an application processor and a modem processor, wherein the application processor primarily handles operating systems, user interfaces, applications, etc., and the modem processor primarily handles wireless communications. It will be appreciated that the modem processor described above may also not be integrated into the processor 2601.

The memory 2602 may be configured to store software programs and modules, and the processor 2601 performs various functional applications and data processing by running the software programs and modules stored in the memory 2602.

The RF circuit 2603 may be used for receiving and transmitting signals in the process of receiving and transmitting information, and in particular, the RF circuit 2603, after receiving downlink information of a base station, transfers the downlink information to the one or more processors 2601 for processing and further transmits data related to the uplink to the base station.

The terminal further includes the power supply 2604 (such as a battery) for powering the various components. Preferably, the power supply may be logically connected to the processor 2601 through a power management system, so as to perform functions such as managing charging, discharging, and power consumption management through the power management system. The power supply 2604 may further include one or more of direct current or alternating current power source, recharging system, power failure detection circuit, power converter or inverter, power status indicator, or any other component.

The terminal may further include an input unit 2605 operable to receive input numeric or character information and to generate keyboard, mouse, operating arm, optical or trackball signal inputs relating to user settings and functional controls.

The terminal may further include a display unit 2606 operable to display information input by or provided to a user as well as various graphical user interfaces of the terminal, which may be composed of graphics, text, icons, videos, and any combination thereof. The display unit 2608 may include a display panel, which may alternatively be configured in the form of a liquid crystal display (LCD), an organic light-emitting diode (OLED), or the like.

Specifically, in the embodiment, the processor 2601 in the terminal loads an executable file corresponding to a process of one or more application programs into the memory 2602 according to the following instructions, and the processor 2601 runs the application programs stored in the memory 2602, thereby realizing various functions.

In one embodiment, an electronic device is provided that includes a memory and a processor, the memory having stored therein computer-readable instructions that, when executed by the processor, cause the processor to perform the steps of: performing motion detection on an object in each video window of multiple video windows in a video interactive interface; when motion information of an object in a target video window is detected, determining animation information and an animation movement direction according to the motion information; determining a termination video window from the multiple video windows in the video interactive interface according to the animation movement direction; and performing animation display in the termination video window according to the animation information.

In one embodiment, the computer-readable instructions, when executed by the processor, cause the processor to perform the following step when performing animation display in the termination video window according to the animation information: performing transformation on the termination video window according to the animation information.

In one embodiment, the computer-readable instructions, when executed by the processor, cause the processor to perform the following steps when performing animation display in the termination video window according to the animation information: displaying an image corresponding to the animation information within the termination video window, and controlling the image to move within the termination video window.

In one embodiment, the computer-readable instructions, when executed by the processor, cause the processor to perform the following steps when performing animation display in the termination video window according to the animation information: displaying an image in the target video window according to the animation information; controlling the image to move to the target termination position of the termination video window according to the animation movement direction; determining a movement termination position within the termination video window, and updating the target termination position as the movement termination position.

In one embodiment, the motion information includes a motion type and a motion direction; the computer-readable instructions, when executed by the processor, cause the processor to perform the following steps when determining animation information and the animation movement direction according to the motion information: determining the animation information according to the motion type, and determining the animation movement direction according to the motion direction.

In one embodiment, the computer-readable instructions, when executed by the processor, cause the processor to further perform the steps of: when motion information of an object in a target video window is detected, performing real-time movement tracking on the object in the target video window; and updating the animation movement direction according to the tracked movement information.

In one embodiment, the motion information includes a motion type and a motion direction; when the computer-readable instructions, when executed by the processor, cause the processor to perform the following steps when controlling the image to move to the target termination position of the termination video window according to the animation movement direction: rotating the image according to the animation movement direction; and when current motion information of the object in the target video window meets a preset image movement triggering condition, controlling the rotated image to move to the target termination position according to the animation movement direction.

In the claimed embodiment, the computer-readable instructions, when executed by the processor, cause the processor to perform the following steps when determining the termination video window from the multiple video windows in the video interactive interface according to the animation movement direction: determining a window judgment area of a candidate video window, wherein the candidate video window is a video window except the target video window in the video interactive interface; drawing a straight line in the video interactive interface according to the animation movement direction; determining a target window judgment area which is first reached when drawing the straight line; and taking a candidate video window corresponding to the target window judgment area as the termination video window.

In one embodiment, the computer-readable instructions, when executed by the processor, cause the processor to perform the following steps when determining the movement termination position within the termination video window: performing motion detection on an object in the termination video window; and when it is detected that motion information of the object in the termination video window meets a preset image receiving condition, determining the movement termination position for image moving in the target video window according to the motion information of the object in the termination video window.

In one embodiment, the computer-readable instructions, when executed by the processor, cause the processor to perform the following step when determining the movement termination position within the termination video window: when a straight line drawn in the video interactive interface according to the animation movement direction does not reach any window judgment area, determining the movement termination position for image moving to be a boundary position of the target video window.

In one embodiment, the computer-readable instructions, when executed by the processor, cause the processor to further perform the steps of: when the image moves to the target termination position, controlling the image to stay at the target termination position for a preset duration; and during the image staying period, controlling the image to move according to current motion information of the object in the termination video window.

According to the embodiment of the application, cross-window animation may be realized in the video interactive interface based on motion information of an object in a video window; for each interactive party of a multi-person video interaction, each video interactive party terminal only needs to perform the same operation, i.e., motion information detection of objects in the video windows and corresponding cross-window animation implementation based on detection result, such that animation effect synchronization may be realized in multi-person video chatting or multi-person live video, without transmitting video pictures with animation effects to other video chatting or live video user terminals, therefore, network resources may be saved, and synchronization of animation effects may be improved.

A non-volatile computer-readable storage medium is provided storing computer-readable instructions that, when executed by one or more processors, cause one or more processors to perform the steps of: performing motion detection on an object in each video window of multiple video windows in a video interactive interface; when motion information of an object in a target video window is detected, determining animation information and an animation movement direction according to the motion information; determining a termination video window from the multiple video windows in the video interactive interface according to the animation movement direction; and performing animation display in the termination video window according to the animation information.

In one embodiment, the computer-readable instructions, when executed by the processor, cause the processor to perform the following step when performing animation display in the termination video window according to the animation information: performing transformation on the termination video window according to the animation information.

In one embodiment, the computer-readable instructions, when executed by the processor, cause the processor to perform the following steps when performing animation display in the termination video window according to the animation information: displaying an image corresponding to the animation information within the termination video window, and controlling the image to move within the termination video window.

In one embodiment, the computer-readable instructions, when executed by the processor, cause the processor to perform the following steps when performing animation display in the termination video window according to the animation information: displaying an image in the target video window according to the animation information; controlling the image to move to the target termination position of the termination video window according to the animation movement direction; determining a movement termination position within the termination video window, and updating the target termination position as the movement termination position.

In one embodiment, the motion information includes a motion type and a motion direction; the computer-readable instructions, when executed by the processor, cause the processor to perform the following steps when determining animation information and the animation movement direction according to the motion information: determining the animation information according to the motion type, and determining the animation movement direction according to the motion direction.

In one embodiment, the computer-readable instructions, when executed by the processor, cause the processor to further perform the steps of: when motion information of an object in a target video window is detected, performing real-time movement tracking on the object in the target video window; and updating the animation movement direction according to the tracked movement information.

In one embodiment, the motion information includes a motion type and a motion direction; when the computer-readable instructions, when executed by the processor, cause the processor to perform the following steps when controlling the image to move to the target termination position of the termination video window according to the animation movement direction: rotating the image according to the animation movement direction; and when current motion information of the object in the target video window meets a preset image movement triggering condition, controlling the rotated image to move to the target termination position according to the animation movement direction.

In the claimed embodiment, the computer-readable instructions, when executed by the processor, cause the processor to perform the following steps when determining the termination video window from the multiple video windows in the video interactive interface according to the animation movement direction: determining a window judgment area of a candidate video window, wherein the candidate video window is a video window except the target video window in the video interactive interface; drawing a straight line in the video interactive interface according to the animation movement direction; determining a target window judgment area which is first reached when drawing the straight line; and taking a candidate video window corresponding to the target window judgment area as the termination video window.

In one embodiment, the computer-readable instructions, when executed by the processor, cause the processor to perform the following steps when determining the movement termination position within the termination video window: performing motion detection on an object in the termination video window; and when it is detected that motion information of the object in the termination video window meets a preset image receiving condition, determining the movement termination position for image moving in the target video window according to the motion information of the object in the termination video window.

In one embodiment, the computer-readable instructions, when executed by the processor, cause the processor to perform the following step when determining the movement termination position within the termination video window: when a straight line drawn in the video interactive interface according to the animation movement direction does not reach any window judgment area, determining the movement termination position for image moving to be a boundary position of the target video window.

In one embodiment, the computer-readable instructions, when executed by the processor, cause the processor to further perform the steps of: when the image moves to the target termination position, controlling the image to stay at the target termination position for a preset duration; and during the image staying period, controlling the image to move according to current motion information of the object in the termination video window.

According to the embodiment of the application, cross-window animation may be realized in the video interactive interface based on motion information of an object in a video window; for each interactive party of a multi-person video interaction, each video interactive party terminal only needs to perform the same operation, i.e., motion information detection of objects in the video windows and corresponding cross-window animation implementation based on detection result, such that animation effect synchronization may be realized in multi-person video chatting or multi-person live video, without transmitting video pictures with animation effects to other video chatting or live video user terminals, therefore, network resources may be saved, and synchronization of animation effects may be improved.

Those of ordinary skill in the art will appreciate that all or some of the steps in the various methods of the embodiments described above may be performed by relevant hardware instructed by a program that may be stored in a computer-readable storage medium including: Read Only Memory (ROM), Random Access Memory (RAM), magnetic disk or CD and the like.

## Claims

1. An animation implementation method, carried out by a terminal (10, 40, 50), the terminal (10, 40, 50) comprising at least a memory and a processor, the method comprising:
performing motion detection on an object in each video window of multiple video windows in a video interactive interface (201);
when motion information of an object in a target video window is detected, determining animation information and an animation movement direction according to the motion information (202);
determining a termination video window from the multiple video windows in the video interactive interface according to the animation movement direction (203); and
performing animation display in the termination video window according to the animation information (204),
wherein the determining the termination video window from the multiple video windows in the video interactive interface according to the animation movement direction (203) comprises:
determining a window judgment area of a candidate video window, wherein the candidate video window is a video window except the target video window in the video interactive interface;
drawing a straight line in the video interactive interface according to the animation movement direction;
determining a target window judgment area which is first reached when drawing the straight line; and
taking a candidate video window corresponding to the target window judgment area as the termination video window.

2. The animation implementation method of claim 1, wherein the performing animation display in the termination video window according to the animation information (204) comprises:
performing transformation on the termination video window according to the animation information.

3. The animation implementation method of claim 1, wherein the performing animation display in the termination video window according to the animation information (204) comprises:
displaying an image corresponding to the animation information within the termination video window, and controlling the image to move within the termination video window.

4. The animation implementation method of claim 1, wherein the performing animation display in the termination video window according to the animation information (204) comprises:
displaying an image in the target video window according to the animation information;
determining a movement termination position within the termination video window, and taking the movement termination position as a target termination position;
controlling the image to move to the target termination position of the termination video window according to the animation movement direction.

5. The animation implementation method of claim 1, wherein the motion information comprises a motion type and a motion direction;
the determining animation information and the animation movement direction according to the motion information (202) comprises:
determining the animation information according to the motion type, and determining the animation movement direction according to the motion direction.

6. The animation implementation method of claim 4, further comprising:
when motion information of an object in a target video window is detected, performing real-time movement tracking on the object in the target video window; and
updating the animation movement direction according to the tracked movement information.

7. The animation implementation method of claim 4, wherein the controlling the image to move to the target termination position of the termination video window according to the animation movement direction comprises:
rotating the image according to the animation movement direction; and
when current motion information of the object in the target video window meets a preset image movement triggering condition, controlling the rotated image to move to the target termination position according to the animation movement direction.

8. The animation implementation method of claim 4, wherein the determining the movement termination position within the termination video window comprises:
performing motion detection on an object in the termination video window; and
when it is detected that motion information of the object in the termination video window meets a preset image receiving condition, determining the movement termination position for image moving according to the motion information of the object in the termination video window.

9. The animation implementation method of claim 8, further comprising:
when a straight line drawn in the video interactive interface according to the animation movement direction does not reach any window judgment area, determining the movement termination position for image moving to be a boundary position of the target video window.

10. The animation implementation method of claim 4, further comprising:
when the image moves to the target termination position, controlling the image to stay at the target termination position for a preset duration; and
during the image staying period, controlling the image to move according to current motion information of the object in the termination video window.

11. A terminal (10, 40, 50), comprising at least a memory and a processor, the memory having stored therein computer-readable instructions which, when executed by the processor, cause the processor to perform the method claimed in any of claims 1 to 10.

12. A non-volatile computer-readable storage medium, storing computer-readable instructions that, when executed by one or more processors, cause the one or more processors to perform the method claimed in any of claims 1 to 10.

## Patentansprüche

1. Animationsimplementierungsverfahren, das von einem Endgerät (10, 40, 50) ausgeführt wird, wobei das Endgerät (10, 40, 50) mindestens einen Speicher und einen Prozessor umfasst, wobei das Verfahren umfasst:
Durchführen einer Bewegungserkennung für ein Objekt in jedem Videofenster von mehreren Videofenstern in einer interaktiven Videoschnittstelle (201);
wenn Bewegungsinformation eines Objekts in einem Zielvideofenster erfasst werden, Bestimmen von Animationsinformation und einer Animationsbewegungsrichtung gemäß der Bewegungsinformation (202);
Bestimmen eines Abschluss-Videofensters aus den mehreren Videofenstern in der interaktiven Videoschnittstelle entsprechend der Bewegungsrichtung der Animation (203); und
Durchführung einer Animationsanzeige im Abschluss-Videofenster gemäß der Animationsinformation (204),
wobei die Bestimmung des Abschluss-Videofensters aus den mehreren Videofenstern in der interaktiven Videoschnittstelle gemäß der Animationsbewegungsrichtung (203) umfasst:
Bestimmen eines Fensterbeurteilungsbereichs eines Kandidatenvideofensters, wobei das Kandidatenvideofenster ein anderes Videofenster als das Zielvideofenster in der interaktiven Videoschnittstelle ist;
Zeichnen einer geraden Linie auf der interaktiven Videoschnittstelle entsprechend der Bewegungsrichtung der Animation;
Bestimmen eines Zielfenster-Beurteilungsbereichs, der beim Zeichnen der geraden Linie zuerst erreicht wird; und
Verwenden eines Kandidaten-Videofensters, das dem Zielfenster-Beurteilungsbereich entspricht, als Abschluss-Videofenster.

2. Animationsimplementierungsverfahren nach Anspruch 1, wobei die Durchführung der Animationsanzeige in dem Abschluss-Videofenster gemäß der Animationsinformation (204) umfasst:
Durchführen einer Transformation auf dem Abschluss-Videofenster gemäß der Animationsinformation.

3. Animationsimplementierungsverfahren nach Anspruch 1, wobei die Durchführung der Animationsanzeige in dem Abschluss-Videofenster gemäß der Animationsinformation (204) umfasst:
Anzeigen eines Bildes, das der Animationsinformation entspricht, innerhalb des Abschluss-Videofensters, und Steuern des Bildes, um sich innerhalb des Abschluss-Videofensters zu bewegen.

4. Animationsimplementierungsverfahren nach Anspruch 1, wobei die Durchführung der Animationsanzeige in dem Abschluss-Videofenster gemäß der Animationsinformation (204) umfasst:
Anzeigen eines Bildes im Zielvideofenster entsprechend der Animationsinformation;
Bestimmen einer Bewegungsabschlussposition innerhalb des Abschluss-Videofensters und Verwenden der Bewegungsabschlussposition als Zielabschlussposition;
Steuern des Bildes, damit es sich entsprechend der Bewegungsrichtung der Animation zur Zielposition des Abschluss-Videofensters bewegt.

5. Animationsimplementierungsverfahren nach Anspruch 1, wobei die Bewegungsinformation einen Bewegungstyp und eine Bewegungsrichtung umfasst;
die Bestimmung der Animationsinformation und der Animationsbewegungsrichtung gemäß der Bewegungsinformation (202) umfasst:
Bestimmen der Animationsinformation entsprechend dem Bewegungstyp und Bestimmen der Animationsbewegungsrichtung entsprechend der Bewegungsrichtung.

6. Animationsimplementierungsverfahren nach Anspruch 4 ferner umfassen:
wenn Bewegungsinformation eines Objekts in einem Zielvideofenster erfasst wird, Durchführen einer Echtzeit-Bewegungsverfolgung für das Objekt in dem Zielvideofenster; und
Aktualisieren der Bewegungsrichtung der Animation entsprechend der verfolgten Bewegungsinformation.

7. Animationsimplementierungsverfahren nach Anspruch 4, wobei die Steuerung des Bildes, um sich zu der Zielabschlussposition des Abschluss-Videofensters gemäß der Animationsbewegungsrichtung zu bewegen, umfasst:
Drehen des Bildes entsprechend der Bewegungsrichtung der Animation; und
wenn die aktuelle Bewegungsinformation des Objekts im Zielvideofenster eine voreingestellte Bildbewegungs-Auslösebedingung erfüllen, das gedrehte Bild so steuern, dass es sich entsprechend der Bewegungsrichtung der Animation zur Zielendposition bewegt.

8. Animationsimplementierungsverfahren nach Anspruch 4, wobei das Bestimmen der Bewegungsabschlussposition innerhalb des Abschluss-Videofensters umfasst:
Durchführen einer Bewegungserfassung an einem Objekt in dem Abschluss-Videofenster; und
wenn detektiert wird, dass die Bewegungsinformation des Objekts in dem Abschluss-Videofenster eine voreingestellte Bildempfangsbedingung erfüllt, Bestimmen der Bewegungsendposition für die Bildbewegung gemäß der Bewegungsinformation des Objekts in dem Abschluss-Videofenster.

9. Animations-Implementierungsverfahren nach Anspruch 8, ferner umfassend:
wenn eine gerade Linie, die in der interaktiven Videoschnittstelle gemäß der Animationsbewegungsrichtung gezeichnet wird, keinen Fensterbeurteilungsbereich erreicht, Bestimmen der Bewegungsendposition für die Bildbewegung als eine Grenzposition des Zielvideofensters.

10. Animationsimplementierungsverfahren nach Anspruch 4, ferner umfassend:
wenn sich das Bild zu der Zielendposition bewegt, Steuern des Bildes, um an der Zielendposition für eine voreingestellte Dauer zu bleiben; und
während der Verweildauer des Bildes, Steuern des Bildes, so dass es entsprechend der aktuellen Bewegungsinformation des Objekts im Abschluss-Videofenster bewegt wird.

11. Endgerät (10, 40, 50), das mindestens einen Speicher und einen Prozessor umfasst, wobei in dem Speicher computerlesbare Befehle gespeichert sind, die, wenn sie von dem Prozessor ausgeführt werden, den Prozessor veranlassen, das in einem der Ansprüche 1 bis 10 beanspruchte Verfahren durchzuführen.

12. Nichtflüchtiges, computerlesbares Speichermedium, das computerlesbare Anweisungen speichert, die, wenn sie von einem oder mehreren Prozessoren ausgeführt werden, den einen oder die mehreren Prozessoren veranlassen, das in einem der Ansprüche 1 bis 10 beanspruchte Verfahren durchzuführen.

## Revendications

1. Procédé de mise en œuvre d'animation, exécuté par un terminal (10, 40, 50), le terminal (10, 40, 50) comprenant au moins une mémoire et un processeur, le procédé consistant à :
effectuer la détection de déplacement d'un objet dans chaque fenêtre vidéo parmi de multiples fenêtres vidéo dans une interface interactive vidéo (201) ;
lorsque les informations de mouvement d'un objet dans une fenêtre vidéo cible sont détectées, déterminer des informations d'animation et une direction de déplacement d'animation conformément aux informations de mouvement (202) ;
déterminer une fenêtre vidéo de fin à partir des multiples fenêtres vidéo dans l'interface interactive vidéo conformément à la direction de déplacement d'animation (203) ; et
effectuer l'affichage d'animation dans la fenêtre vidéo de fin conformément aux informations d'animation (204),
dans lequel la détermination de la fenêtre vidéo de fin à partir des multiples fenêtres vidéo dans l'interface interactive vidéo conformément à la direction de déplacement d'animation (203) consiste à :
déterminer une zone d'estimation de fenêtre d'une fenêtre vidéo candidate, la fenêtre vidéo candidate étant une fenêtre vidéo hormis la fenêtre vidéo cible dans l'interface interactive vidéo ;
dessiner une ligne droite dans l'interface interactive vidéo conformément à la direction de déplacement d'animation ;
déterminer une zone d'estimation de fenêtre cible qui est la première atteinte lorsque la ligne droite est dessinée ; et
prendre une fenêtre vidéo candidate correspondant à la zone d'estimation de fenêtre cible en tant que fenêtre vidéo de fin.

2. Procédé de mise en œuvre d'animation selon la revendication 1, dans lequel la réalisation de l'affichage d'animation dans la fenêtre vidéo de fin conformément aux informations d'animation (204) consiste à :
effectuer la transformation sur la fenêtre vidéo de fin conformément aux informations d'animation.

3. Procédé de mise en œuvre d'animation selon la revendication 1, dans lequel la réalisation de l'affichage d'animation dans la fenêtre vidéo de fin conformément aux informations d'animation (204) consiste à :
afficher une image correspondant aux informations d'animation à l'intérieur de la fenêtre vidéo de fin, et amener l'image à se déplacer à l'intérieur de la fenêtre vidéo de fin.

4. Procédé de mise en œuvre d'animation selon la revendication 1, dans lequel la réalisation de l'affichage d'animation dans la fenêtre vidéo de fin conformément aux informations d'animation (204) consiste à :
afficher une image dans la fenêtre vidéo de fin conformément aux informations d'animation ;
déterminer une position de fin de déplacement à l'intérieur de la fenêtre vidéo de fin, et prendre la position de fin de déplacement en tant que position de fin cible ;
amener l'image à se déplacer vers la position de fin cible de la fenêtre vidéo de fin conformément à la direction de déplacement d'animation.

5. Procédé de mise en œuvre d'animation selon la revendication 1, dans lequel les informations de mouvement comprennent un type de mouvement et une direction de mouvement ;
la détermination des informations d'animation et de la direction de déplacement d'animation conformément aux informations de mouvement (202) consiste à :
déterminer les informations d'animation conformément au type de mouvement, et déterminer la direction de déplacement d'animation conformément à la direction de mouvement.

6. Procédé de mise en œuvre d'animation selon la revendication 4, consistant en outre à :
lorsque les informations de mouvement d'un objet dans une fenêtre vidéo cible sont détectées, effectuer le suivi de déplacement en temps réel sur l'objet dans la fenêtre vidéo cible ; et
mettre à jour la direction de déplacement d'animation conformément aux informations de déplacement suivi.

7. Procédé de mise en œuvre d'animation selon la revendication 4, dans lequel amener l'image à se déplacer vers la position de fin cible de la fenêtre vidéo de fin conformément à la direction de déplacement d'animation consiste à :
faire tourner l'image conformément à la direction de déplacement d'animation ; et
lorsque les informations de mouvement actuelles de l'objet dans la fenêtre vidéo cible remplissent une condition de déclenchement de déplacement d'image prédéfinie, amener l'image tournée à se déplacer vers la position de fin cible conformément à la direction de déplacement d'animation.

8. Procédé de mise en œuvre d'animation selon la revendication 4, dans lequel la détermination de la position de fin de déplacement à l'intérieur de la fenêtre vidéo de fin consiste à :
effectuer la détection de mouvement sur un objet dans la fenêtre vidéo de fin ; et
lorsqu'il est détecté que les informations de mouvement de l'objet dans la fenêtre vidéo de fin remplissent la condition de réception d'image prédéfinie, déterminer la position de fin de mouvement pour le déplacement d'image conformément aux informations de mouvement de l'objet dans la fenêtre vidéo de fin.

9. Procédé de mise en œuvre d'animation selon la revendication 8, consistant en outre à :
lorsqu'une ligne droite dessinée dans l'interface vidéo interactive conformément à la direction de déplacement d'animation n'atteint pas une quelconque zone d'estimation de fenêtre, déterminer la position de fin de déplacement pour l'image se déplaçant comme étant une position limite de la fenêtre vidéo cible.

10. Procédé de mise en œuvre d'animation selon la revendication 4, consistant en outre à :
lorsque l'image se déplace vers la position de fin cible, amener l'image à demeurer à la position de fin cible pour une durée prédéfinie ; et
pendant la durée dans laquelle l'image demeure dans la position, amener l'image à se déplacer conformément aux informations de mouvement actuelle de l'objet dans la fenêtre vidéo de fin.

11. Terminal (10, 40, 50), comprenant au moins une mémoire et un processeur, la mémoire ayant stocké en son sein des instructions lisibles par ordinateur qui, lorsqu'elles sont exécutées par le processeur, amènent le processeur à exécuter le procédé selon l'une quelconque des revendications 1 à 10.

12. Support de stockage lisible par ordinateur non volatile, stockant des instructions lisibles par ordinateur qui, lorsqu'elles sont exécutées par un ou plusieurs processeurs, amènent le ou les processeurs à exécuter le procédé selon l'une quelconque des revendications 1 à 10.
